# FASCICULE DE BREVET EUROPEEN

(11) **EP 2 460 000 B1**
(45) Date de publication et mention de la délivrance du brevet: **31.10.2018**
(21) Numéro de dépôt: 10737055.3
(22) Date de dépôt: 28.07.2010
(51) Int. Cl.: G01N 27/82, G01N 27/90, G21C 17/017

(54) **DISPOSITIF DE DETECTION D'AU MOINS UN DEFAUT D'UNE STRUCTURE CONCAVE OU CONVEXE**
VORRICHTUNG ZUR ERKENNUNG VON MINDESTENS EINEM DEFEKT BEI EINER KONKAVEN ODER KONVEXEN STRUKTUR
DEVICE FOR DETECTING AT LEAST ONE DEFECT IN A CONCAVE OR CONVEX STRUCTURE

(30) Priorité: 30.07.2009 FR 0955341
(43) Date de publication de la demande: 06.06.2012
(73) Titulaire: Commissariat à l'Énergie Atomique et aux Énergies Alternatives, 75015 Paris (FR); Institut de Radioprotection et de Sûreté Nucléaire, 92260 Fontenay aux Roses (FR)
(72) Inventeur: DECITRE, Jean-Marc, F-91460 Marcoussis (FR); CASULA, Olivier, F-91310 Longpont sur Orge (FR); CATTIAUX, Gérard, F-78117 Chateaufort (FR)
(74) Mandataire: Ilgart, Jean-Christophe
(86) Numéro de dépôt international: PCT/EP2010/060935
(87) Numéro de publication internationale: WO 2011/012639

(56) Documents cités:
- EP-A2- 1 674 860
- WO-A2-2008/156628
- US-A1- 2003 173 959
- US-A1- 2004 004 475

## Description

### DOMAINE TECHNIQUE

L'invention concerne un dispositif de détection d'au moins un défaut d'une structure concave ou convexe, par exemple cylindrique.

### ÉTAT DE LA TECHNIQUE ANTÉRIEURE

Le domaine de l'invention est celui de la détection de défauts de structures concaves ou convexes. Elle s'applique notamment à la détection de défauts tels que des fissures dans un tube, par exemple un tube de générateur de vapeur (GV) d'une centrale nucléaire. Ces défauts sont essentiellement des défauts circonférentiels ou d'orientation transversale qui peuvent conduire à la rupture du tube, quelles que soient les conditions rencontrées à savoir :
- en présence d'une variation de diamètre du tube (Zone de Transition de Dudgeonnage (ZTD)) : les capteurs à Courants de Foucault sont alors efficaces à condition qu'il n'y ait pas de variation d'entrefer au cours de l'inspection,
- et/ou en présence d'un défaut longitudinal qui se superpose au défaut circonférentiel recherché.

Le domaine de l'invention est par exemple celui du contrôle d'expertise d'un tube d'un générateur de vapeur depuis la surface interne du tube, plus facilement accessible sur site en présence de :
- zones de déformations des tubes (ZTD, ovalisation),
- défauts complexes : on appelle « défaut complexe » un défaut composé de la superposition (sous forme de croix, de T ou de L) d'au moins un défaut longitudinal et d'au moins un défaut transversal (ou transverse) externe (typiquement de hauteur 40% de l'épaisseur du tube de générateur de vapeur),
- plaques entretoises, qui servent au maintien des tubes.

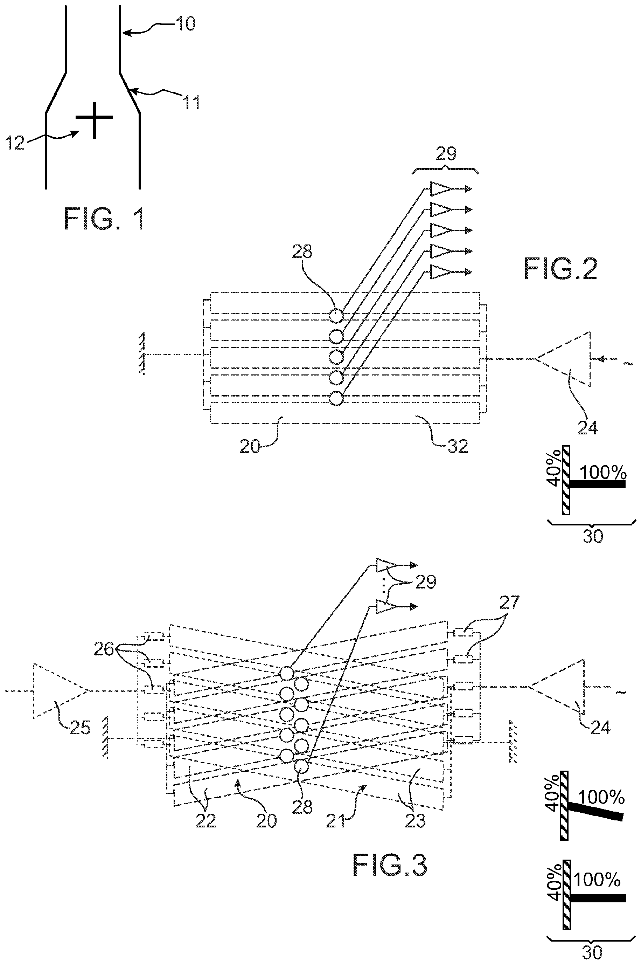

La figure 1 illustre schématiquement une telle problématique de contrôle dans un tube 10 de générateur de vapeur, avec une zone de transition de dudgeonnage 11, et un défaut complexe 12.

Des sondes commerciales permettant le contrôle des tubes d'un générateur de vapeur sur site existent déjà. Elles peuvent être de type monoélément ou multiéléments. Ces sondes ne se révèlent cependant pas très efficaces pour la détection de la composante transversale d'un défaut complexe, dans la mesure où la réponse de la composante longitudinale est souvent prépondérante et masque alors la signature complète du défaut complexe. Or, la détection de tous les défauts transversaux est un enjeu important dans la mesure où ce type de défaut peut conduire à une rupture de tube (effet guillotine). De plus, au passage d'une zone de transition de dudgeonnage, et bien que la sonde puisse être disposée sur un système à ressort qui la plaque sur la surface interne du tube, il peut y avoir apparition d'un signal parasite.

Le document référencé [1] en fin de description décrit un appareil et un procédé pour une mesure non destructive d'un matériau à tester en utilisant des capteurs qui appliquent des champs électromagnétiques à ce matériau et détectent des variations des champs électromagnétiques dues à la proximité et aux propriétés de ce matériau.

L'invention a pour objet un dispositif de détection d'au moins un défaut d'une structure concave ou convexe permettant de pallier ces inconvénients d'une part en utilisant, en émission, une nappe de courant orientée pour induire dans le tube des courants parallèles aux défauts longitudinaux et d'autre part en utilisant, en réception, des supports flexibles sur lesquels sont gravés ou rapportés les récepteurs.

### EXPOSÉ DE L'INVENTION

L'invention concerne un dispositif de détection d'au moins un défaut dans un tube comprenant une partie émettrice et une partie réceptrice, caractérisé en ce que la partie émettrice comprend deux nappes de courant de plusieurs brins conducteurs identiques parallèles entre eux et des fils de retour d'alimentation, chaque nappe de courant étant gravée sur un support flexible en kapton l'une à +θ° et l'autre à -θ° par rapport à un plan, en ce qu'il comprend une pièce magnétique disposée entre les nappes de courant et les fils de retour d'alimentation, et en ce que la partie réceptrice comprend au moins un récepteur de champ magnétique, rapporté ou gravé sur un support flexible en kapton.

Les récepteurs peuvent être des bobinages, des récepteurs magnétiques (GMR, AMR, GMI, Fluxgate, TMR, effet Hall,...) ou une combinaison de différents types de tels récepteurs. L'orientation des récepteurs peut être variable. En particulier, l'axe de sensibilité des récepteurs magnétiques peut être orienté par rapport au tube.

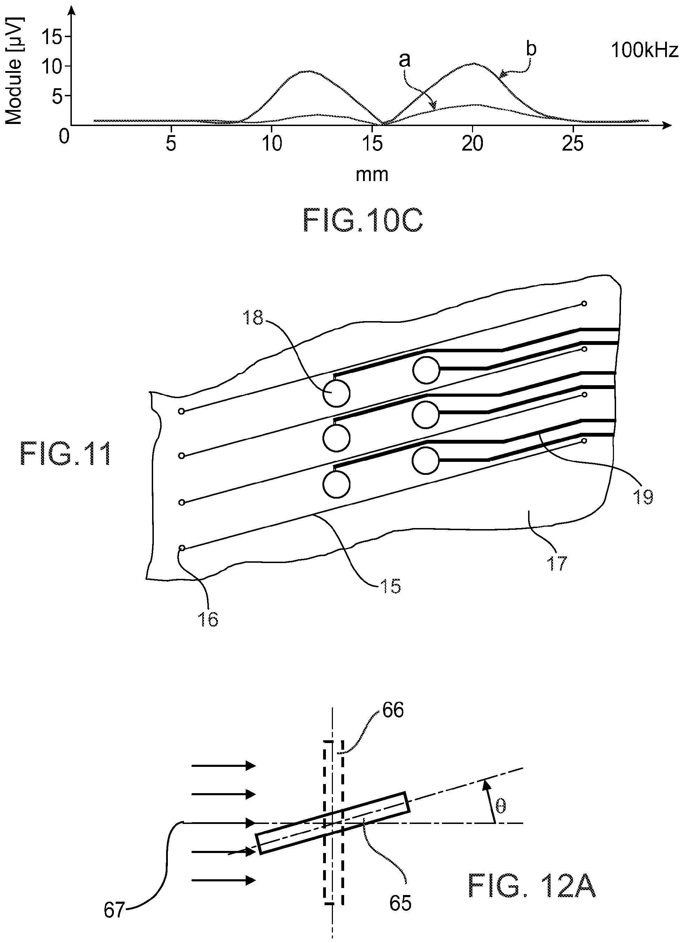

Avantageusement, comme illustré sur la figure 11, le film flexible de la partie réceptrice comporte des fentes 15 permettant de se conformer aux variations de diamètre du tube (R2), avantageusement avec des trous 16 situés aux extrémités des fentes 15 pour éviter que le support flexible ne file, et est disposé sur une mousse ou un dispositif à ressort permettant de plaquer le support flexible 17 sur la surface interne de la structure à contrôler, avec des bobinages 18 et de la connectique 19.

Selon un mode de réalisation particulier, θ=10°.

Dans un mode de réalisation, le dispositif de l'invention comprend une nappe de courant orientée selon l'axe des défauts dont on souhaite minimiser l'influence (défaut longitudinaux traversant dans le cas d'un tube de générateur de vapeur) et de maximiser l'effet des autres défauts (défauts transverses dans le cas d'un générateur de vapeur).

Dans un mode de réalisation la partie émettrice comprend deux nappes de courant disposées à + ou - θ par rapport à l'axe des défauts dont on souhaite minimiser l'influence. Ainsi, les courants induits dans la structure peuvent être orientées selon un angle de + ou - θ, par exemple 10°, en jouant sur l'amplitude des tensions d'alimentation des deux nappes, ce qui permet d'utiliser la même sonde si les défauts dont on souhaite minimiser l'influence ne sont pas rigoureusement orientés selon le même axe.

Avantageusement chaque nappe de courant de la partie émettrice comprend un ensemble de brins conducteurs identiques, parallèles entre eux, reliés en série ou en parallèle, un amplificateur alimentant chaque nappe en courant sinusoïdal. Une résistance peut être associée en série avec chaque brin.

Avantageusement les récepteurs de la partie réceptrice sont associés à des amplificateurs faible bruit.

Une pièce en matériau magnétique, rigide ou flexible (telle qu'un ruban magnétique) peut être disposée entre la partie émettrice, et les fils de retour.

Avantageusement la partie réceptrice comprend des récepteurs disposés sur au moins deux colonnes en quinconce.

La technologie de bobinages gravés sur support flexible, par exemple en kapton, permet à la sonde d'épouser au mieux la surface de la structure à contrôler en garantissant une bonne détection des défauts grâce à la minimisation de l'entrefer. La sonde flexible ainsi réalisée permet d'améliorer la détection de défaut et la caractérisation de ce type de configuration, dans des conditions délicates telles qu'une variation de rayon de courbure de la surface à contrôler.

### BRÈVE DESCRIPTION DES DESSINS

La figure 1 illustre schématiquement la problématique de contrôle dans un tube de générateur de vapeur.
Les figures 2 et 3 illustrent deux modes de réalisation du dispositif de l'invention.
Les figures 4A et 4B représentent la déviation des courants induits pour un défaut transverse externe respectivement dans une vue de dessus et une vue de coté.
Les figures 5A et 5B représentent la déviation des courants induits pour un défaut longitudinal traversant respectivement dans une vue de dessus et une vue de coté.
Les figures 6A et 6B, et 7A et 7B illustrent les schémas des configurations de base en fonction de la fréquence respectivement pour un défaut 40% externe et pour un défaut 100% externe.
Les figures 8A, 8B et 8C représentent des courbes illustrant les configurations de base en fonction de la fréquence pour respectivement : un maximum de l'amplitude de la réponse à un défaut transverse 40% fonction (fréquence), un maximum de l'amplitude de la réponse à un défaut longitudinal traversant, et le rapport des deux quantités précédentes pour le défaut transverse et le défaut longitudinal en fonction de la fréquence.
Les figures 9A et 9B représentent une configuration du dispositif selon l'invention en place sur la structure à contrôler.
Les figures 10A, 10B et 10C, illustrent une configuration du dispositif selon l'invention en place sur la structure à contrôler avec introduction d'un ruban magnétique (figures 10A, 10B) et une courbe expérimentale correspondant à la détection d'un défaut de 10 mm de longueur avec et sans ruban magnétique.
La figure 11 représente la partie réceptrice munie de fentes.
Les figures 12A et 12B illustrent une variation de la désorientation d'un défaut longitudinal à 100KHz.
La figure 13 illustre le schéma de deux nappes désorientées de + et - θ.
La figure 14 illustre un schéma de la mise en série et/ou parallèle de certains brins d'une nappe de courant ou ensemble de brins.
Les figures 15A et 15B illustrent l'influence de l'entrefer d'un récepteur.
Les figures 16A et 16B, et 16C et 16D illustrent la détermination de l'espacement minimum entre récepteurs respectivement pour une réponse à un défaut transversal 40% et pour un défaut longitudinal 100%.
Les figures 17A, 17B et 17C illustrent une cartographie obtenue en tenant compte du pas entre récepteurs, avec 16 récepteurs, illustrés sur la figure 17A, pour un défaut transverse 40% (figure 17B) et pour un défaut longitudinal 100% (figure 17C).
La figure 18 illustre un schéma d'un exemple de réalisation du dispositif de l'invention.
La figure 19 illustre les caractéristiques dimensionnelles d'un exemple de réalisation de demi-tubes de référence.
Les figures 20A, 20B, 20C et 20D illustrent des schémas de demi-tubes de référence.
La figure 21 illustre un schéma d'une configuration de contrôle sur un demi-tube de référence.
Les figures 22A et 22B illustrent des cartographies obtenues respectivement avec un défaut longitudinal et avec un défaut transversal à 240KHz.
La figure 23 illustre une configuration de mesure.
Les figures 24A et 24B illustrent la comparaison de données expérimentales (figure 24A) et de données simulées (figure 24B) pour un défaut transversal 40% à 240KHz.
La figure 25 illustre une configuration des brins aller et retour d'une nappe sur la périphérie d'un cylindre.

### EXPOSÉ DÉTAILLÉ DE MODES DE RÉALISATION PARTICULIERS

Le dispositif de l'invention, dans un premier mode de réalisation illustré sur la figure 2, permet d'induire des courants de Foucault dans un tube. Il comprend une partie émettrice comportant au moins une nappe de courant 20 constituée d'un ensemble de brins 32 conducteurs identiques, parallèles entre eux, reliés en série ou en parallèle, créant sous la nappe 20 un champ magnétique émis de manière quasiment uniforme en amplitude et orientation. Un amplificateur 24 alimente la nappe 20 en courant sinusoïdal. La partie réceptrice comprend des bobinages 28 par exemple gravés sur un film kapton. Chacun de ceux-ci peut être associé à un amplificateur faible bruit 29. La nappe de courant 20, lorsqu'elle est orientée selon l'axe d'un tube, permet d'induire dans ce tube des courants parallèles aux défauts longitudinaux.

Le dispositif de l'invention, dans un second mode de réalisation illustré sur la figure 3, comprend une partie émettrice comportant deux nappes de courant 20 et 21 de plusieurs brins 22, 23 utilisées, chacune, avec un amplificateur 24 et 25. Ces nappes de courant 20 et 21 sont disposées à + et - 10° par rapport au plan horizontal, ce qui permet d'ajuster l'orientation de la nappe résultante en jouant sur les amplitudes des signaux d'alimentation de mêmes fréquences. Dans la réalisation, les deux nappes sont chacunes gravées sur un support flexible en kapton. Du fait que leur diamètre au sein de la sonde est fixe, il est possible de les bobiner sur un noyau rigide. Mais les résistances des brins, lors de la réalisation du circuit imprimé, peuvent différer entre elles, ce qui entraîne une inhomogénéité du champ émis. L'insertion d'une résistance 26, 27 dans chaque brin 22 ou 23 contribue à homogénéiser le courant dans les différents brins, le courant étant alors essentiellement fixé par la résistance. La partie réceptrice comprend des bobinages 28 disposés sur deux colonnes en quinconce afin d'augmenter la résolution spatiale du dispositif de l'invention. Chaque récepteur 28 possède un amplificateur faible bruit 29. La référence 30 illustre des défauts complexes.

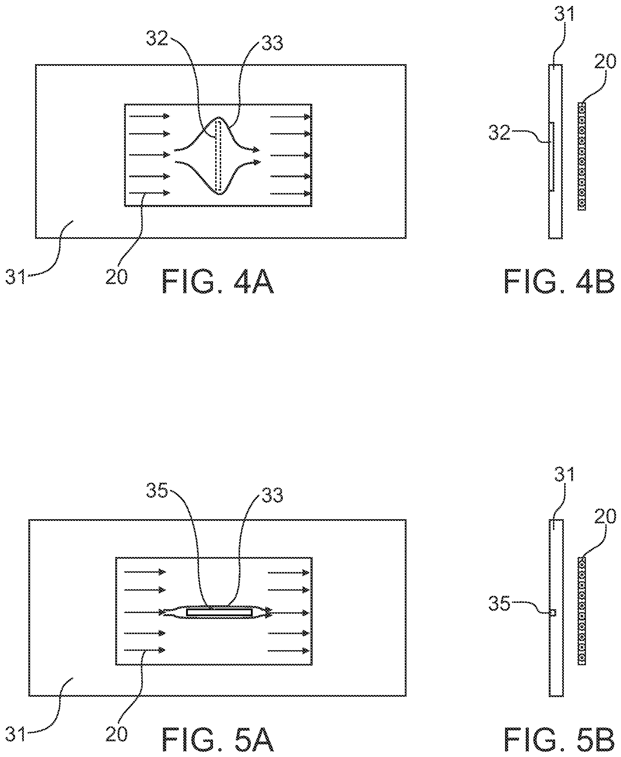

Dans un premier temps, on considère le premier mode de réalisation du dispositif de l'invention. Les figures 4A et 4B représentent schématiquement le trajet, respectivement dans une vue de dessus et une vue de coté, des courants induits en présence des deux composantes d'un défaut transversal 40% externe pris séparément. Sur ces figures sont représentés un tube 31, la nappe 20, un défaut 32, et les courants induits 33. Les figures 5A et 5B sont des vues analogues pour un défaut longitudinal traversant 35. Comparé à la réponse du défaut transversal 40% externe, le fait que le défaut longitudinal soit traversant, qui devrait donner intuitivement un fort champ magnétique rayonné, est compensé par le fait que la déviation des courants induits pour ce défaut est très faible.

Des résultats expérimentaux montrent l'intérêt du premier mode de réalisation du dispositif de l'invention pour la détection d'un défaut transversal en présence d'un défaut longitudinal. La partie réceptrice comprend des micro-bobines. La nappe de la partie émettrice et les micro-bobines de la partie réceptrice sont gravées sur des films kapton afin de bénéficier de la flexibilité de ce support souple.

### Optimisation des paramètres du dispositif de l'invention

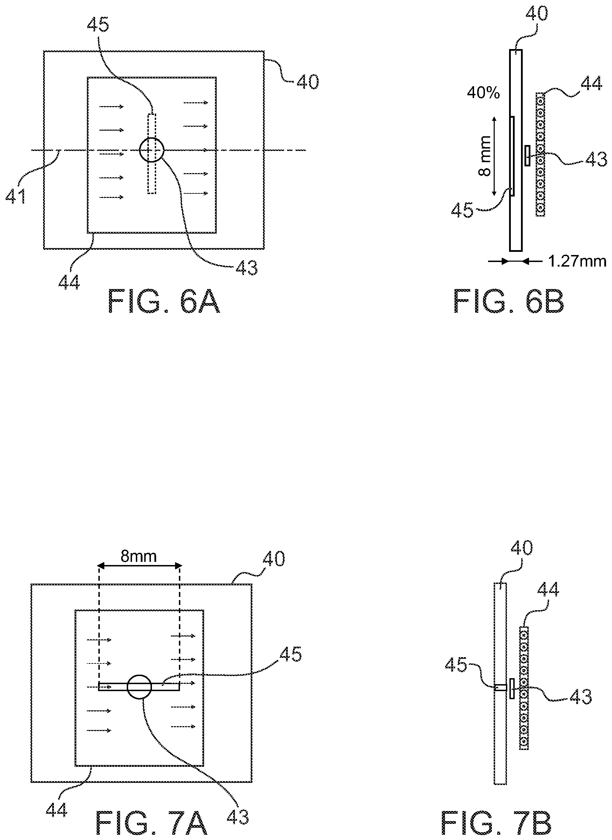

Les figures 6A et 6B, 7A et 7B donnent une configuration de base utilisée pour un ensemble de simulations respectivement pour un défaut transversal de hauteur 40% par rapport à l'épaisseur du tube (figures 6A et 6B), et pour un défaut longitudinal traversant, d'axe parallèle à l'orientation de la nappe (figures 7A et 7B). Sur ces figures sont représentés un tube 40, l'axe 41 de ce tube, une bobine réceptrice 43 et une nappe de courant 44. et un défaut 45.

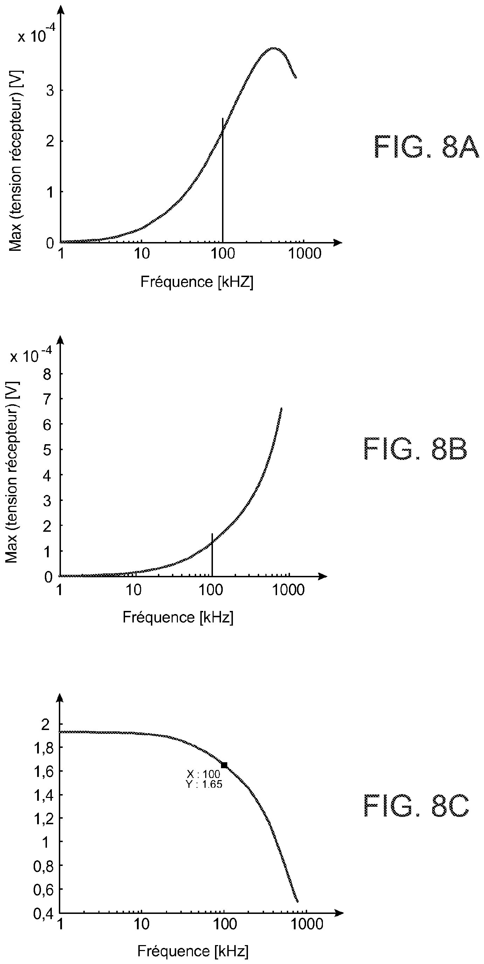

Ici, on utilise une fréquence de travail supérieure ou égale à 100KHz. Les fréquences de 240KHz ou 600KHz peuvent ainsi être utilisées. A ces fréquences, la contribution transverse du défaut complexe est plus favorable que dans le cas de l'utilisation d'une sonde classique en mode fonctions séparées et d'autant plus favorable que la fréquence est basse (voir figures 8A, 8B et 8C).

### 1. Partie émettrice

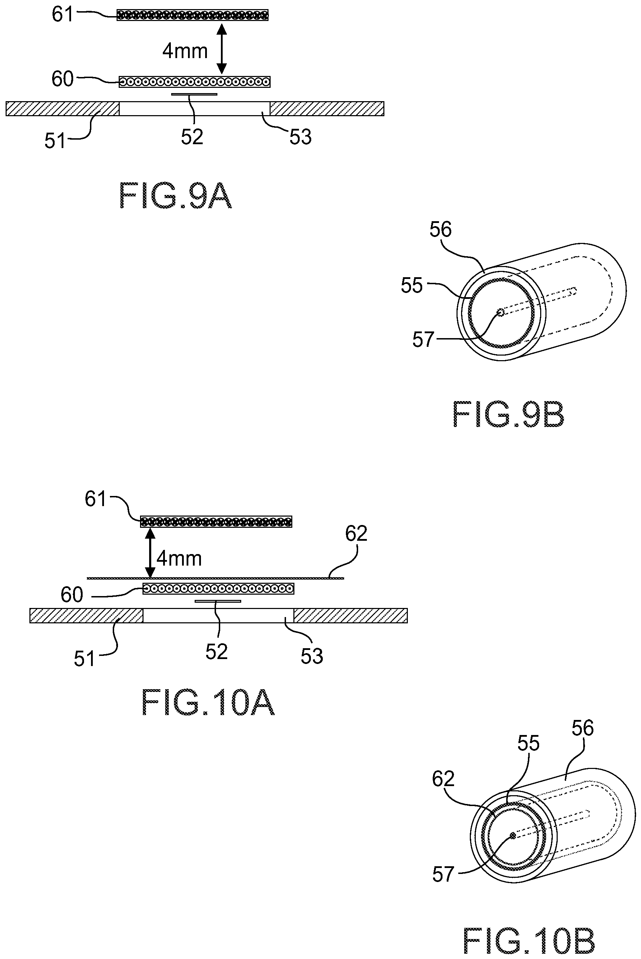

Les figures 9A et 9B représentent une configuration du dispositif en place sur la structure à contrôler: la partie émettrice est constituée d'une nappe 55 de diamètre fixe sur le pourtour intérieur du tube 56 (on note l'absence d'effet de bord de la nappe dans cette disposition), les fils de retour 57 d'alimentation transitant par le centre du tube. (La partie réceptrice est référencée 52).

Puisqu'il circule nécessairement autant de courant dans la nappe 55 que dans les fils de retour d'alimentation 57, ces fils 57 risquent de générer un champ magnétique qui va s'opposer au champ créé par la nappe 55 elle-même. Si on insère entre la partie émettrice (nappes 60 et 61) et les fils de retour 57 une pièce en matériau magnétique rigide ou flexible 62 (par exemple en matériau nanocristallin), et par exemple placée au plus près de la partie émettrice comme illustré sur les figures 10A et 10B, le ruban 62 annule les effets du retour d'alimentation et amplifie le champ magnétique émis par la nappe 55. La figure 10C présente deux courbes expérimentales correspondant à la détection d'un défaut de 10 mm de longueur, d'une part en l'absence de pièce magnétique entre la nappe et le retour des conducteurs de la nappe (courbe a), et d'autre part en présence d'un ruban magnétique en matériau nanocristallin disposé au dessus de la nappe (courbe b). On constate que la signature du défaut est amplifiée par la présence de la pièce magnétique, du fait de l'augmentation du champ magnétique rayonné par la nappe. Ce ruban 62 est donc très bénéfique.

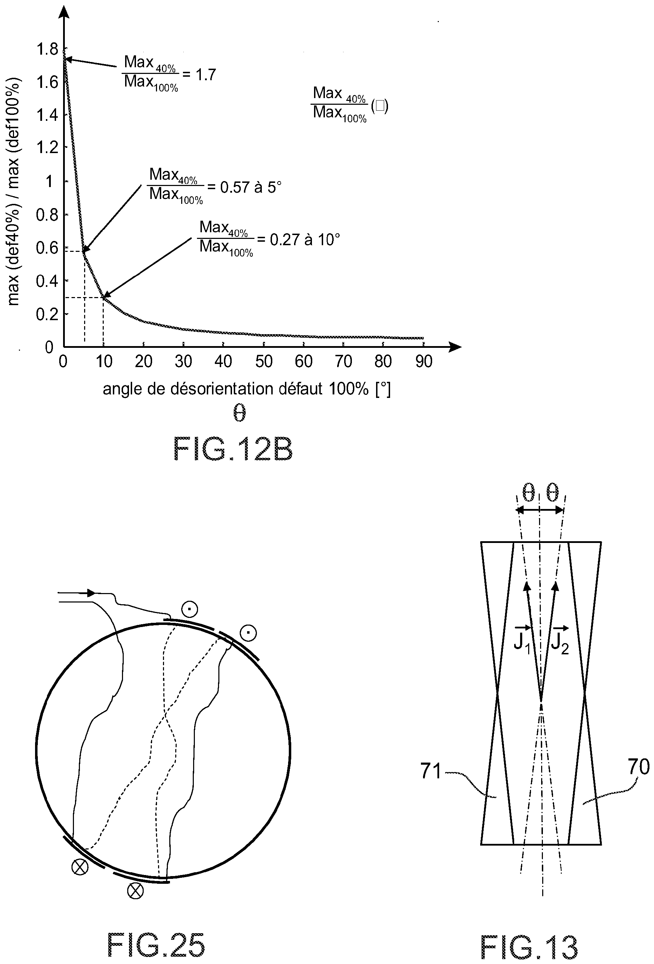

La partie émettrice comprend un inducteur de type nappe de courant qui permet de minimiser la réponse des défauts longitudinaux lorsque la direction de la nappe est parallèle à celle du défaut (voir figures 12A et 12B). Une désorientation de quelques degrés du défaut longitudinal entraîne une augmentation importante de l'amplitude de la signature due à la contribution longitudinale du défaut complexe. La réponse au défaut longitudinal devient alors bien plus importante que celle due au défaut transversal, ce qui est très défavorable pour le dispositif de l'invention. Il est donc intéressant de pouvoir ajuster l'orientation de la nappe.

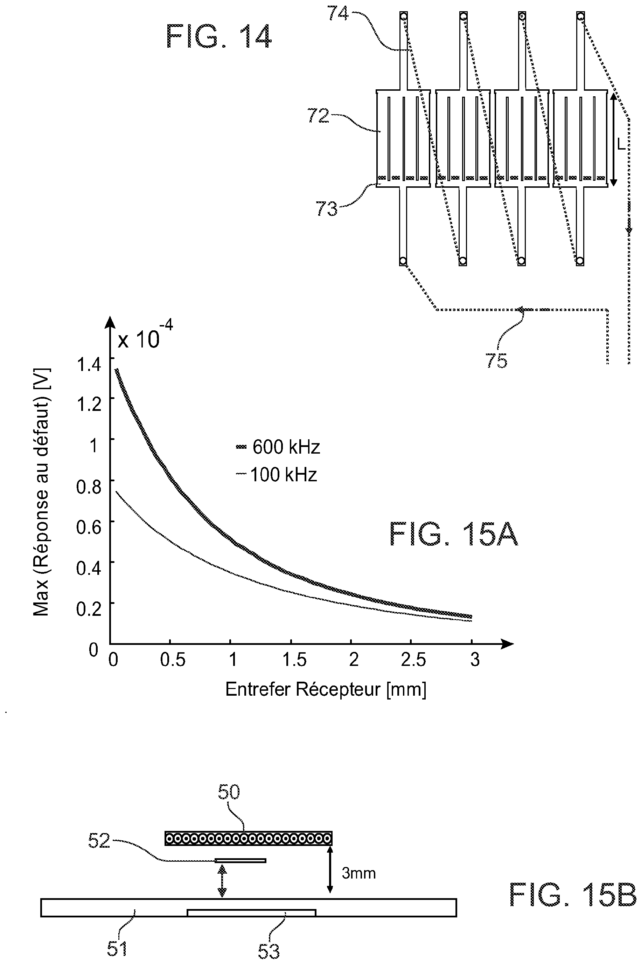

On considère donc deux nappes émettrices 70, 71 disposées l'une au dessus de l'autre et désorientées de +10° et -10° par rapport à l'axe du tube 72 comme illustré sur la figure 13, (dans le cas où on estime qu'en pratique une entaille dite longitudinale dont on souhaite minimiser l'effet peut se créer avec une orientation extrême comprise entre - 10° et + 10° par rapport à l'axe du tube), ce qui correspond au second mode de réalisation illustré sur la figure 3. On peut alors orienter les courants de Foucault dans le tube comme on le souhaite, en jouant sur les tensions d'alimentation de chacune des nappes 70 et 71 afin de réduire l'influence du défaut longitudinal sur la détection du défaut transversal. Une configuration avec deux nappes orientée à 90° l'une par rapport à l'autre est également possible et permet d'orienter les courants dans toutes les directions. (R4) Afin d'assurer une bonne homogénéisation du courant, chacune des deux nappes 70 et 71 identifiées figure 13 est par exemple constituée de 16 brins élémentaires 72, identifiés figure 14, en série avec une résistance 73 de quelques ohms dont le rôle est de fixer un courant sensiblement identique dans chacun des brins. Dans le but d'avoir une impédance bien adaptée à la source d'alimentation, certains brins sont associés en parallèle, d'autres en série, conformément au schéma de la figure 14, avec un bouclage 74 par l'axe du tube. Le courant d'alimentation 75, de l'ordre de 100mA, est délivré par deux buffers situés dans le corps du dispositif de l'invention.

La nappe peut également prendre d'autres configurations avec des brins aller sur une portion périphérique de cylindre et le même nombre de brins retour disposés ailleurs sur la périphérie, par exemple sur une portion diamétralement opposée, comme illustré sur la figure 25 pour deux brins aller et deux brins retour, tous disposés en série. Dans ce cas, seules les zones sous les nappes peuvent être utilisées. Les récepteurs ne pouvant alors couvrir l'ensemble du périmètre, on peut utiliser cette configuration dans le cas de la réalisation d'une sonde tournante disposant de quelques récepteurs.

### 2. Partie réceptrice

L'influence de l'entrefer entre le récepteur et la pièce (tube) sur la réponse aux défauts est illustrée sur les figures 15A et 15B, l'entrefer de la nappe étant alors fixé à 3mm. La réponse des récepteurs est très sensible à cet entrefer, contrairement à celle des émetteurs, très peu sensible à l'entrefer entre la partie émettrice et la pièce. Le récepteur 52 doit être le plus près possible de la surface du tube et surtout l'entrefer doit être constant lors du déplacement du dispositif de l'invention afin que le signal de variation d'entrefer ne perturbe pas le signal dû aux défauts.

Pour contrôler la surface complète de la structure en un nombre limité de passage, le dispositif de l'invention peut comprendre un nombre limité ou important de récepteurs et la sonde est déplacé à la surface de la pièce. Dans le cas du contrôle d'un tube, soit un nombre suffisant de récepteurs est réparti sur toute la circonférence de la sonde et celle-ci est déplacée selon l'axe du tube, soit quelques récepteurs sont utilisés (avantageusement de type ou d'orientations différents) et la sonde est animée d'un mouvement hélicoïdal afin d'inspecter la totalité de la surface interne du tube. Dans tous les cas, on obtient une cartographie ayant une bonne résolution spatiale permettant d'effectuer des post-traitements.

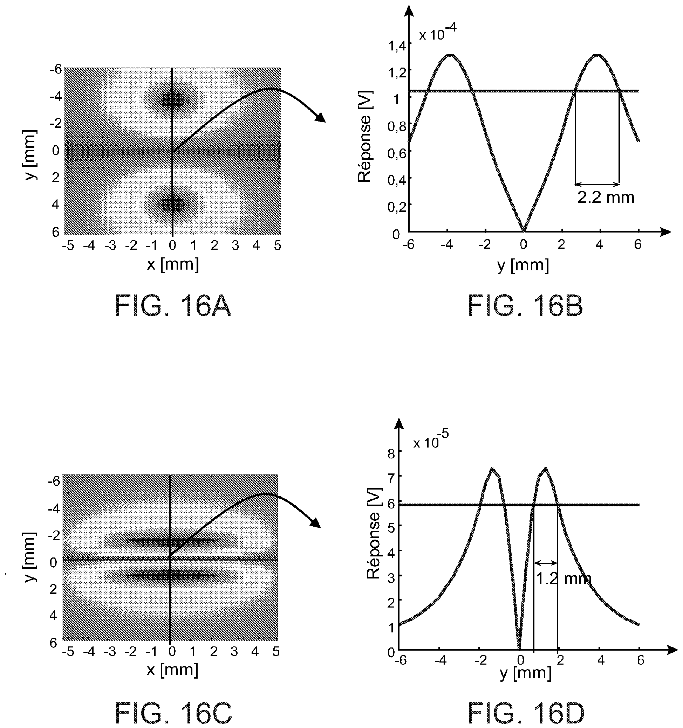

Les simulations illustrées en figures 16A et 16B d'une part, et en figures 16C et 16D d'autre part représentent respectivement l'extraction d'une ligne de la cartographie d'un défaut transversal 40% externe et l'extraction d'une ligne de la cartographie d'un défaut longitudinal 100% selon l'axe Y, en passant par le maximum de chaque cartographie, ces simulations étant réalisées à 100KHz.

Pour détecter des défauts complexes dans le tube, et donc avoir une résolution spatiale suffisante même pour la signature du défaut longitudinal 100%, le pas entre deux récepteurs voisins est inférieur à 1.2 mm (pris à 80% de l'amplitude maximale). En prévoyant 64 récepteurs (2 lignes de 32) répartis sur tout le pourtour du tube, on fixe pour une sonde quart de tube un pas de mesure d'environ 1 mm.

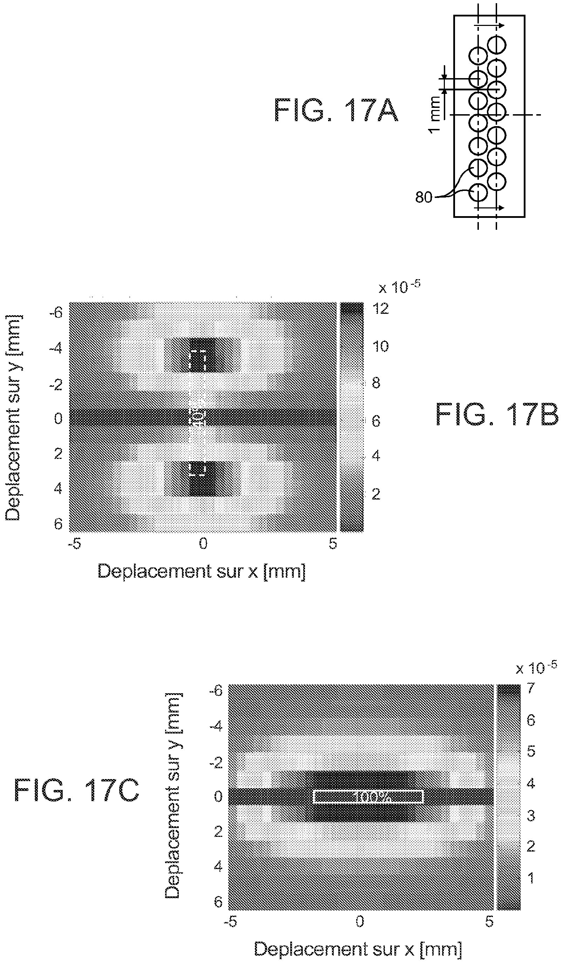

Pour des questions d'encombrement, les bobinages récepteurs 80 sont disposés en quinconce sur deux lignes, comme illustré sur la figure 17A. Une image de cartographie simulée avec un tel espacement entre les récepteurs, respectivement avec un défaut transverse 40% et un défaut longitudinal 100% est donnée sur les figures 17B et 17C dans le cas d'une sonde prototype quart de tube disposant de 16 récepteurs.

Il est également possible d'utiliser des récepteurs autres que les bobinages, ceux-ci ne permettent de mesurer que la composante normale au tube du champ magnétique. On peut par exemple utiliser les récepteurs magnétiques (GMR, GMI, AMR, FluxGates, effet Hall, ...). Ces composants peuvent être gravés ou rapportés sur un film souple. Ils peuvent de plus être choisis ou orientés de sorte à mesurer le champ magnétique dû au défaut selon la composante normale, axiale ou circonférentielle par rapport au tube. Une association de différents récepteurs est possible à l'intérieur d'une même sonde (en version tournante ou multiéléments), ce qui peut permettre la détection de différents défauts. Notamment, l'utilisation de GMR dont l'axe sensible est orienté suivant l'axe circonférentiel permet la détection des défauts circonférentiels 360° de manière optimale alors qu'un tel défaut ne serait pas détecté en mesurant la composante normale du champ.

### 3. Bilan

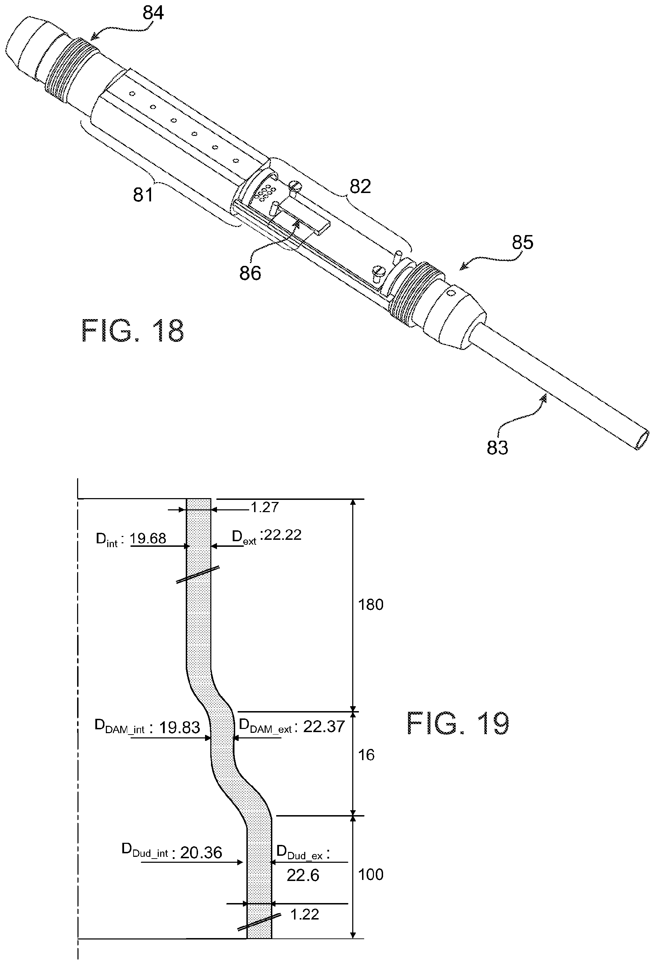

Les éléments précédents donnent les principales caractéristiques géométriques du dispositif de l'invention et définissent les spécifications des différentes parties de la sonde illustrée sur la figure 18, notamment :
- les différents kapton + ruban magnétique + mousse 81 : le kapton avec les bobinages récepteurs et le kapton avec les deux nappes à + et - 10°,
- l'électronique 82 embarquée dans le dispositif de l'invention : deux buffers d'alimentation des nappes et un préamplificateur pour chacun des bobinages récepteurs,
- le câble de connexion 83 qui se branche sur l'appareil de traitement des données,
- le corps de la sonde comprenant deux bagues de centrage 84, 85, et un connecteur nappe-récepteurs 86.

### Exemple de réalisation

Un demi-tube en Inconel 600, dont les diamètres sont identiques à ceux des tubes d'un générateur de vapeur 900MW a été réalisé pour tester le dispositif de l'invention. Il comporte une zone de déformation dont les côtes géométriques choisies sont pénalisantes (voir les caractéristiques dimensionnelles illustrées en figure 19). Le diamètre interne du demi-tube avant et après la zone de déformation varie de 19.68 mm à 20.36 mm.

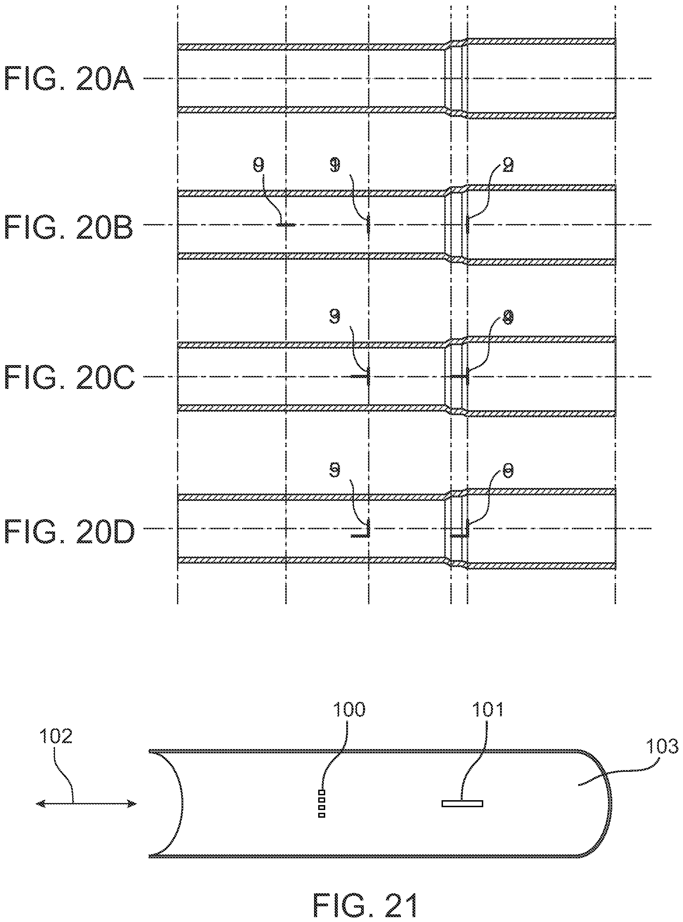

Le descriptif du demi-tube est donné sur la figure 20. Des défauts simples ont été implantés sur le demi-tube. Ces défauts sont réalisés par électroérosion, à savoir :

| Demi-tube | Spécificités |
|---|---|
| figure 20B | Trois défauts simples 90, 91, 92 : |
| | - 100% longitudinal en partie courante |
| | - 40% transversal en partie courante |
| | - 40% transversal en zone de transition de dudgeonnage |

Dans cet exemple de réalisation on utilise sur le film kapton émetteur (inducteur) les deux nappes à + et -10° et deux séries de résistances, une série par nappe. Sur le film kapton récepteur, on utilise 16 bobinages (double faces) et le connecteur. Des entailles sont pratiquées dans le film kapton afin qu'il puisse s'adapter aux variations de diamètre du tube. Le film kapton récepteur est plaqué sur une mousse, ce qui permet au film kapton récepteur de s'adapter aux déformations du tube.

La partie électronique comprend des amplificateurs faible bruit pour chacun des récepteurs, ainsi que les buffers pour alimenter les deux nappes. La sonde ainsi formée dispose de bagues de centrage à chacune de ces extrémités pour pouvoir être maintenue dans le tube.

Grâce à un tube en plexiglas, de diamètre identique à celui d'un tube de générateur de vapeur, possédant une zone de déformation, on vérifie visuellement le bon comportement mécanique des bobinages récepteurs du film kapton qui s'ouvre en corolle au passage d'une zone de déformation.

Les conditions expérimentales mise en oeuvre sont les suivantes :
- appareil de traitement utilisé : Appareil MultiX CF 64 voies M2M,
- injection : 30 mA par brin pour la nappe intérieure et 25 mA par brin de la nappe extérieure,
- fréquence : 240 kHz,
- gain : 50 dB.

Les tests sont réalisés dans la partie courante du demi- tube (comme illustré sur la figure 21), sur une entaille transversale 40% externe de 6 mm de longueur 100 et longitudinale 100% de 7 mm de longueur 101, avec un déplacement 102 de la sonde, 103 représentant le tube. On vérifie ainsi que la sonde ainsi réalisée donne des signaux corrects et correspondant à ceux attendus pour des détections de défauts simples (longitudinal et transversal).

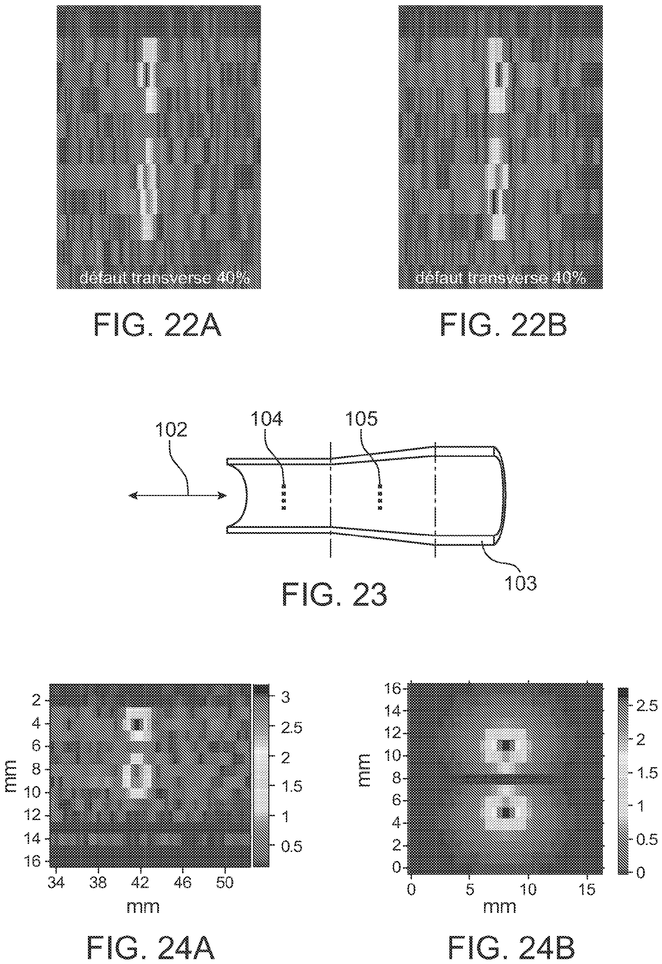

Les figures 22A et 22B présentent la cartographie obtenue à 240KHz pour un contrôle avec la sonde dans le demi-tube n°2. On observe d'abord le défaut transversal 40% 104 en partie plane, puis le même défaut 105 en zone de déformation, comme le montre la figure 23. Les signatures des deux défauts sont semblables. On constate d'une part que les amplitudes maximales sont du même ordre de grandeur, d'autre part qu'aucun signal dû à la zone de déformation n'apparaît alors que les caractéristiques géométriques de la zone de déformation sont pénalisantes.

Les figures 24A et 24B donnent une comparaison en module entre les données expérimentales et les données simulées pour le défaut transversal externe 40% isolé. L'axe des abscisses est corrigé, notamment en prenant en compte le décalage entre les deux lignes de récepteurs. On constate une bonne adéquation entre les données, on vérifie ainsi que l'association de la mousse et du kapton avec les entailles permet de suivre parfaitement les surfaces de déformation 3D (trois dimensions) que sont les zones de déformation. Les résultats montrent que le dispositif de l'invention réagit bien aux défauts que l'on souhaite détecter.

### REFERENCE

[1] US 7,049,811

## Revendications

1. Dispositif de détection d'au moins un défaut dans un tube (56) comprenant une partie émettrice et une partie réceptrice, **caractérisé en ce que** la partie émettrice comprend deux nappes de courant (20, 21 ; 60, 61) de plusieurs brins conducteurs identiques parallèles entre eux et des fils (57) de retour d'alimentation, chaque nappe de courant étant gravée sur un support flexible en kapton l'une à +θ° et l'autre à -θ° par rapport à un plan, **en ce qu'**il comprend une pièce magnétique (62) disposée entre les nappes de courant (20, 21 ; 60, 61) et les fils (57) de retour d'alimentation, et **en ce que** la partie réceptrice comprend au moins un récepteur de champ magnétique (28) rapporté ou gravé sur un support flexible en kapton.

2. Dispositif selon la revendication 1, dans lequel une partie des récepteurs sont des bobinages.

3. Dispositif selon la revendication 1, dans lequel une partie des récepteurs sont des récepteurs magnétiques dont l'axe de sensibilité est orienté par rapport au tube.

4. Dispositif selon la revendication 1, dans lequel chaque support flexible récepteur comporte des fentes (15) avec un trou (16) à chaque extrémité de celles-ci et est plaqué sur une mousse.

5. Dispositif selon la revendication 1, dans lequel θ=10°.

6. Dispositif selon la revendication 1, comprenant deux nappes de courant (20, 21) orientées à 90° l'une par rapport à l'autre permettant d'orienter les courants dans toutes les directions.

7. Dispositif selon la revendication 1, dans lequel chaque nappe de courant de la partie émettrice (20, 21) comprend un ensemble de brins conducteurs (22, 23) identiques, parallèles entre eux reliés en série pour certains et/ou en parallèle pour d'autres.

8. Dispositif selon la revendication 7, comprenant une résistance (26, 27) en série avec chaque brin (22, 23).

9. Dispositif selon la revendication 1, dans lequel un amplificateur (33) alimente chaque nappe de courant de la partie émettrice en courant sinusoïdal.

10. Dispositif selon la revendication 1, dans lequel les récepteurs sont associés à des amplificateurs faible bruit (29).

11. Dispositif selon la revendication 1, dans lequel la partie réceptrice comprend des récepteurs disposés sur au moins deux colonnes en quinconce.

## Patentansprüche

1. Vorrichtung zur Detektion wenigstens eines Fehlers in einem Rohr (56), umfassend einen Sendeteil und einen Empfangsteil, **dadurch gekennzeichnet, dass** der Sendeteil zwei Stromschichten (20, 21; 60, 61) mit mehreren identischen, zueinander parallelen leitenden Adern und Stromrückführungsdrähte (57) umfasst, wobei jede Stromschicht auf einen flexiblen Träger aus Kapton geätzt ist, die eine mit +θ° und die andere mit -θ° bezüglich einer Ebene, dass sie ein magnetisches Element (62) umfasst, das zwischen den Stromschichten (20, 21; 60, 61) und den Stromrückführungsdrähten (57) angeordnet ist, und dass der Empfangsteil wenigstens einen Magnetfeldempfänger (28) umfasst, der auf einem flexiblen Träger aus Kapton angebracht oder geätzt ist.

2. Vorrichtung nach Anspruch 1, bei der ein Teil der Empfänger Wicklungen sind.

3. Vorrichtung nach Anspruch 1, bei der ein Teil der Empfänger Magnetempfänger sind, deren Empfindlichkeitsachse bezüglich des Rohrs orientiert ist.

4. Vorrichtung nach Anspruch 1, bei der jeder flexible Empfangsträger Schlitze (15) mit einem Loch (16) an jedem Ende derselben umfasst und auf einem Schaum aufgebracht ist.

5. Vorrichtung nach Anspruch 1, bei der θ=10°.

6. Vorrichtung nach Anspruch 1, umfassend zwei Stromschichten (20, 21), die 90° zueinander orientiert sind, was es erlaubt, die Ströme in allen Richtungen zu orientieren.

7. Vorrichtung nach Anspruch 1, bei der jede Stromschicht des Sendeteils (20, 21) eine Gruppe von identischen leitenden Adern (22, 23) umfasst, die zueinander parallel und für einige in Reihe verbunden und/oder für andere parallel verbunden sind.

8. Vorrichtung nach Anspruch 7, umfassend einen Widerstand (26, 27) in Reihe mit jeder Ader (22, 23).

9. Vorrichtung nach Anspruch 1, bei der ein Verstärker (33) jede Stromschicht des Sendeteils mit einem sinusförmigen Strom versorgt.

10. Vorrichtung nach Anspruch 1, bei der die Empfänger rauscharmen Verstärkern (29) zugeordnet sind.

11. Vorrichtung nach Anspruch 1, bei der der Empfangsteil Empfänger umfasst, die auf wenigstens zwei Säulen in Quincunx angeordnet sind.

## Claims

1. A device for detection of at least one defect in a tube (56) comprising an emitting part and a receiving part, **characterised in that** the emitting part comprises two current layers (20, 21; 60, 61) of several identical conducting strands, which are parallel to each other, and power supply return wires (57), each current layer being etched on a flexible support made of kapton, one at an angle of +θ° and the other at an angle of -θ° with respect to a plane, **in that** it comprises a magnetic piece (62) arranged between the current layers (20, 21; 60, 61) and the power supply return wires (57), and **in that** the receiving part comprises at least one magnetic field receiver (28) added on or etched to a flexible support made of kapton.

2. The device of claim 1, wherein part of the receivers are coils.

3. The device of claim 1, wherein some of the receivers are magnetic receivers with a sensitive axis oriented relative to the tube.

4. The device of claim 1, wherein each receiving flexible support comprises slots (15) with a hole (16) at each end of the slots and is squeezed onto a piece of foam.

5. The device of claim 1, wherein θ=10°.

6. The device of claim 1, comprising two current layers (20, 21) oriented at 90° from each other so as to allow orienting the currents in all directions.

7. The device of claim 1, wherein each current layer (20, 21) of the emitting part comprises a set of identical conducting strands (22, 23), parallel to each other and connected in series for some of them and/or in parallel for others.

8. The device of claim 7, comprising a resistance (26, 27) in series with each strand (22, 23).

9. The device of claim 1, wherein an amplifier (33) supplies sinusoidal current to each current layer of the emitting part.

10. The device of claim 1, wherein the receivers are associated with low noise amplifiers (29).

11. The device of claim 1, wherein the receiving part comprises receivers arranged on at least two columns staggered relative to each other.
